# DEMANDE DE BREVET EUROPEEN

(11) **EP 1 378 978 A1**
(43) Date de publication de la demande: **07.01.2004**
(21) Numéro de dépôt: 03356099.6
(22) Date de dépôt: 01.07.2003
(51) Int. Cl.: H02G 3/08

(54) **Entretoise et boîtier comportant cette entretoise**

(30) Priorité: 02.07.2002 FR 0208260
(71) Demandeur: MECELEC INDUSTRIES, 07300 Mauves (FR)
(72) Inventeur: Benoist, Etienne, 07300 Saint Jean de Muzols (FR); Costechareyre, Bruno, 07500 Guilherand-Granges (FR)
(74) Mandataire: Myon, Gérard

(57) **Abrégé**

Cette entretoise (8) est équipée d'une prise électrique (16) et a une géométrie permettant son insertion et son installation entre un corps fixe (4) d'un boîtier (1) et un couvercle (5) articulé sur ce corps fixe (4).

Elle permet de faire passer un boîtier d'une configuration compacte à une configuration avec prise, de façon simple et réversible.

## Description

La présente invention concerne une entretoise, ainsi qu'un boîtier comportant une telle entretoise.

Un appareil électrique installé à l'extérieur, tel qu'un lampadaire, peut être pourvu d'un coupe-circuit de sécurité, lequel est placé dans un boîtier équipant l'appareil électrique. En temps normal, ce boîtier est fermé, mais il doit pouvoir être ouvert, par exemple afin de pouvoir accéder au coupe-circuit lorsque le fusible de ce coupe-circuit est à remplacer ou lorsque le coupe circuit doit être ré-armé. Il est connu qu'à cet effet, le boîtier peut comporter un corps et un couvercle articulés l'un à l'autre.

A l'heure actuelle, certains des boîtiers dont on équipe les appareils électriques installés à l'extérieur sont munis d'une prise électrique, tandis que d'autres en sont dépourvus. L'opération qui permet d'ôter ou d'installer une prise électrique consiste donc à remplacer un boîtier d'un premier type par un boîtier d'un autre type.

Les deux sortes de boîtiers sont réparties géographiquement, par exemple à l'échelle d'une rue ou d'un quartier, selon une prévision quant aux lieux où l'on aura régulièrement ou occasionnellement besoin d'une prise pour connecter temporairement un dispositif tel qu'une guirlande électrique d'extérieur. Les besoins réels peuvent s'avérer être différents de cette prévision. Ils peuvent également évoluer dans le temps. Dans un cas comme dans l'autre, mieux satisfaire ces besoins nécessite d'installer une ou plusieurs nouvelles prises, tandis qu'une ou plusieurs prises en place doivent être démontées si, par économie, l'on veut réduire au minimum nécessaire le nombre de prises installées. C'est pourquoi il est particulièrement préjudiciable que l'opération qui permet d'ôter ou d'installer une prise électrique présente l'inconvénient d'être difficile, longue et coûteuse à réaliser.

L'invention, qui entend remédier à cet inconvénient, a donc au moins pour but de faciliter l'installation d'une prise sur un appareil pourvu d'un boîtier et/ou le démontage d'une prise équipant un tel appareil.

Ce but est atteint en employant l'entretoise définie par la revendication 1 annexée.

D'autres caractéristiques avantageuses de cette entretoise et d'un boîtier la comportant sont définies par les revendications 2 à 12 annexées.

L'invention sera bien comprise à la lecture de la description qui va suivre, donnée uniquement à titre d'exemple et faite en se référant aux dessins annexés, sur lesquels :
- la figure 1 est une vue éclatée, en perspective, d'un boîtier conforme à l'invention et comprenant une entretoise, également conforme à l'invention
- la figure 2 est une vue en perspective où le boîtier de la figure 1 est assemblé ;
- la figure 3 est une vue en coupe selon la ligne III-III de la figure 2 ;
- la figure 4 est une vue qui est analogue à celle de la figure 3 et où l'entretoise a été retirée du boîtier des figures 1 à 3 ; et
- les figures 5 à 7 sont des vues analogues à celles des figures 3 et 4 et illustrent respectivement trois étapes successives de l'installation de l'entretoise pour constituer le boîtier des figures 1 à 3, à partir du boîtier de la figure 4.

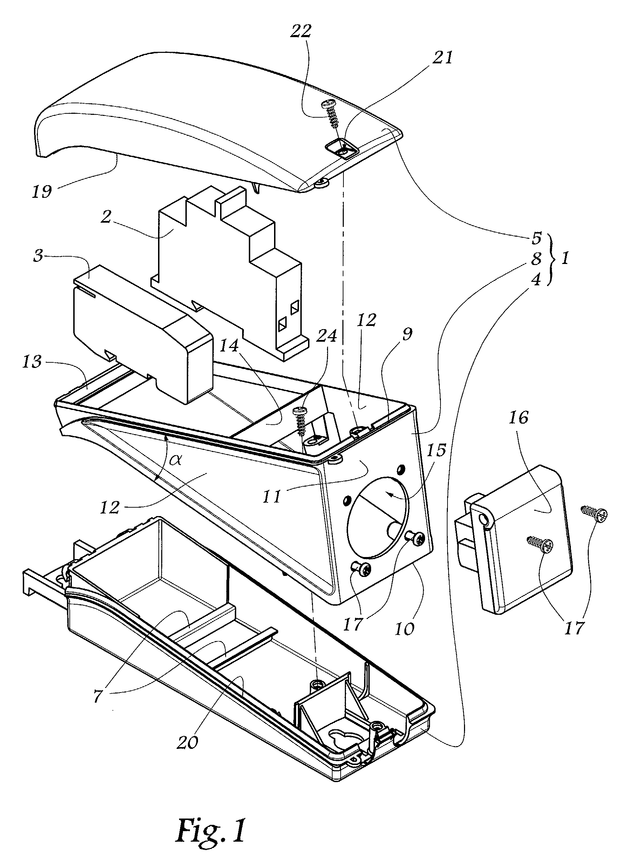

Les figures 1 à 3 représentent un boîtier allongé 1, qui est destiné à équiper un appareil électrique d'extérieur, tel qu'un lampadaire non représenté, et qui renferme un disjoncteur de sécurité 2, ainsi qu'une coupe-circuit de sécurité 3 à fusible, ce coupe-circuit 3 étant destiné à protéger l'appareil électrique en étant connecté dans le circuit d'alimentation de cet appareil.

Le boîtier 1 comporte un corps 4, destiné à être fixé en façade ou sur un poteau, à proximité de l'appareil à protéger, ainsi qu'un couvercle 5, qui est monté à basculement sur le corps 4, à l'aide d'une charnière 6. Le disjoncteur 2 et le coupe-circuit 3 sont fixés au corps 4 en étant encliquetés sur deux nervures intérieures et transversales de montage 7, dont est pourvu ce corps 4.

Le boîtier 1 comporte également une entretoise amovible 8, qui montée entre le corps 4 et le couvercle 5 décalés angulairement l'un de l'autre. L'entretoise 8 a globalement la forme d'un coin creux et elle est plus précisément configurée comme un conduit en forme de coin. Les deux bords opposés par lesquels se termine ce conduit sont respectivement référencés 9 et 10. L'entretoise 8 comporte une paroi avant et rectangulaire 11, à partir de laquelle s'étendent, à angle droit, deux côtés globalement triangulaires 13, en regard l'un de l'autre. A l'opposé de la paroi 11, une traverse arrière 13 relie une extrémité d'un côté 12 à une extrémité de l'autre côté 12. Ces deux côtés 12 sont également reliés l'un à l'autre par une traverse de renforcement 14, placée entre la traverse 13 et la paroi 11.

La paroi 11 est percée d'une ouverture circulaire 15 et porte une prise électrique 16, qui obture cette ouverture 15 et qui est fixée par des vis 17. Le disjoncteur 2 est prévu pour protéger le dispositif destiné à être raccordé à la prise électrique 16, à laquelle il est donc relié par des fils électriques non représentés.

La traverse 13 est pourvue d'un rebord intérieur 18 d'accrochage de l'entretoise 8 au corps 4.

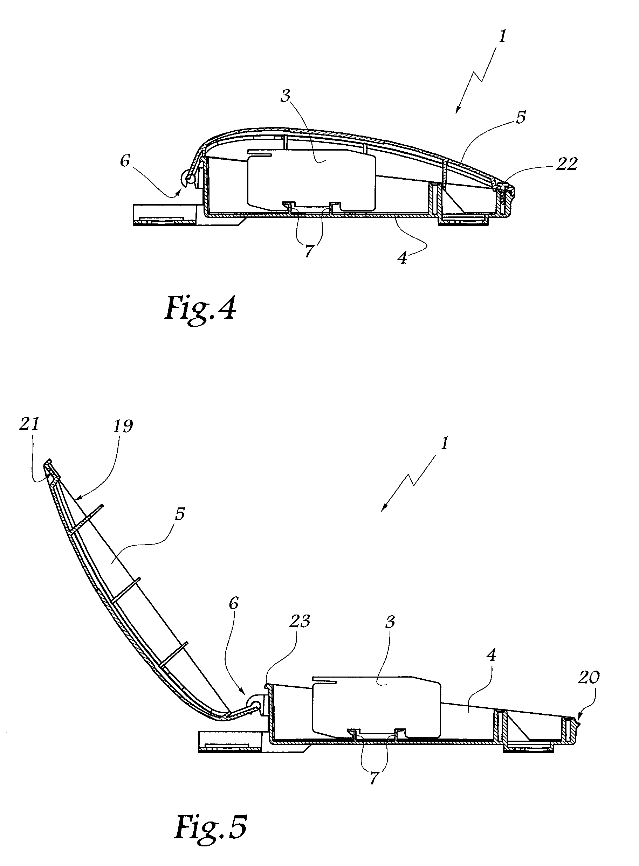

Sauf au voisinage de la charnière 6, le bord 9 de l'entretoise 8 a une forme complémentaire de celle du bord 19 du couvercle 5. Sauf à proximité de la charnière 6, le bord 10 de l'entretoise 8 a une forme complémentaire de celle du bord 20 du corps 4. Or, les formes respectives des bords 19 et 20 sont complémentaires, ainsi qu'on peut le voir à la figure 4. Il s'ensuit que les bords 9 et 10 de l'entretoise 8 ont également des formes complémentaires, sauf au voisinage de la traverse 13. Là où ils sont de formes complémentaires, les bords 9 et 10 sont angulairement décalés l'un de l'autre d'un angle α. Au niveau des côtés triangulaires 12, ils se rapprochent l'un de l'autre en allant de la paroi 11 vers la traverse 13.

Le corps 4, le couvercle 5 et l'entretoise 8 sont réalisés en matière synthétique.

Sur la figure 4, le boîtier 1 est fermé et dépourvu de l'entretoise 8. Le couvercle 5, dans lequel un trou 21 est ménagé à l'opposé de la charnière 6, est basculé contre le corps 4 et maintenu ainsi par une vis 22 passant dans le trou 21 et vissée dans ce corps 4. Le bord 19 s'adapte sur le bord 20, si bien que le corps 4 et le couvercle 5 délimitent conjointement un volume intérieur dans lequel ne se trouve que le coupe-circuit 3, le disjoncteur 2 étant inutile en l'absence de la prise électrique 16.

Dans cette configuration, le boîtier 1 présente un encombrement minimum. Un tel boîtier 1 peut être installé par défaut dans cette configuration à proximité de chaque lampadaire d'une rue ou d'une zone piétonne.

Lorsqu'un lampadaire doit être pourvu d'une prise électrique, on équipe son boîtier 1 d'une entretoise et d'un disjoncteur 2.

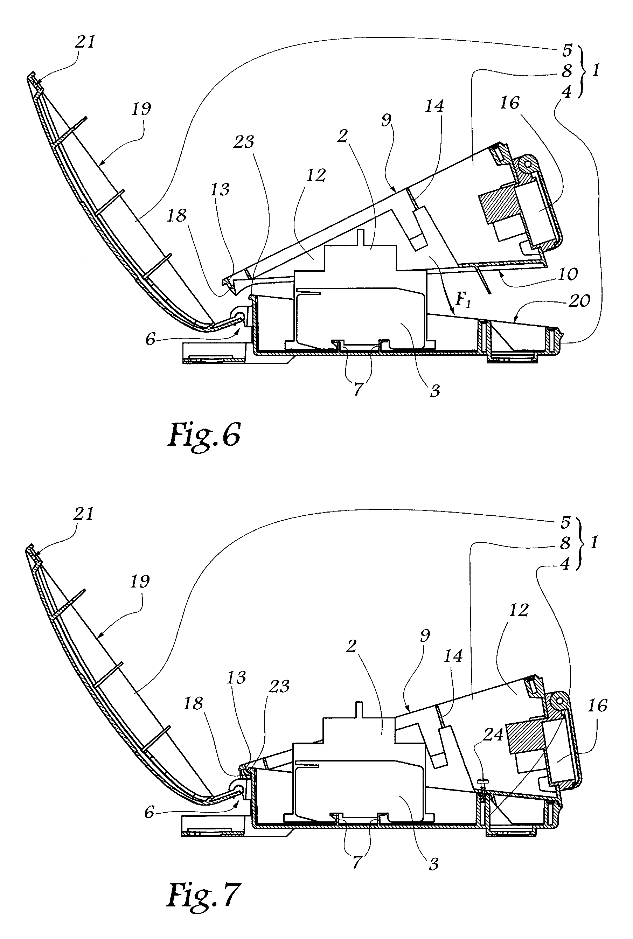

Pour installer l'entretoise 8 dans le boîtier 1 alors que ce dernier est tel qu'illustré sur la figure 4, on commence par dévisser partiellement la vis 22, après quoi on bascule le couvercle 5 à l'écart du corps 4. Une fois que le boîtier 1 est ouvert, c'est-à-dire tel qu'à la figure 5, un disjoncteur de sécurité 2 est encliqueté sur les nervures de montage 7 et relié au circuit dans lequel est connecté le coupe-circuit 3. Ensuite, comme ceci est symbolisé par la flèche F₁ à la figure 6, on installe l'entretoise 8 sur le corps 4, en faisant en sorte que le bord 10 s'adapte sur le bord 20 et que le rebord 18 s'accroche à un rebord 23 dont est muni le corps 4. Une fois que l'entretoise 8 est correctement positionnée, on immobilise cette entretoise 8 contre le corps 4, à l'aide d'une vis 24 que l'on installe à l'écart du rebord d'accrochage 18, ce qu'illustre la figure 7.

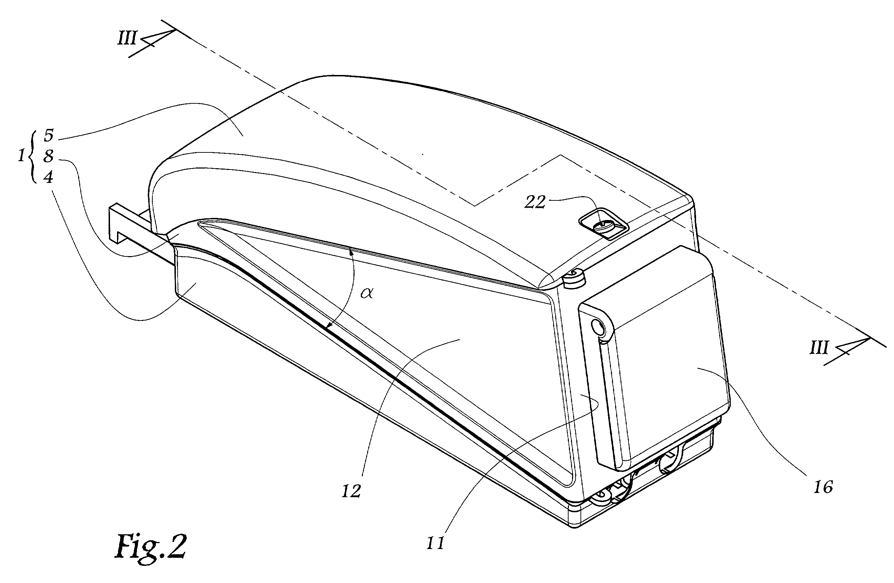

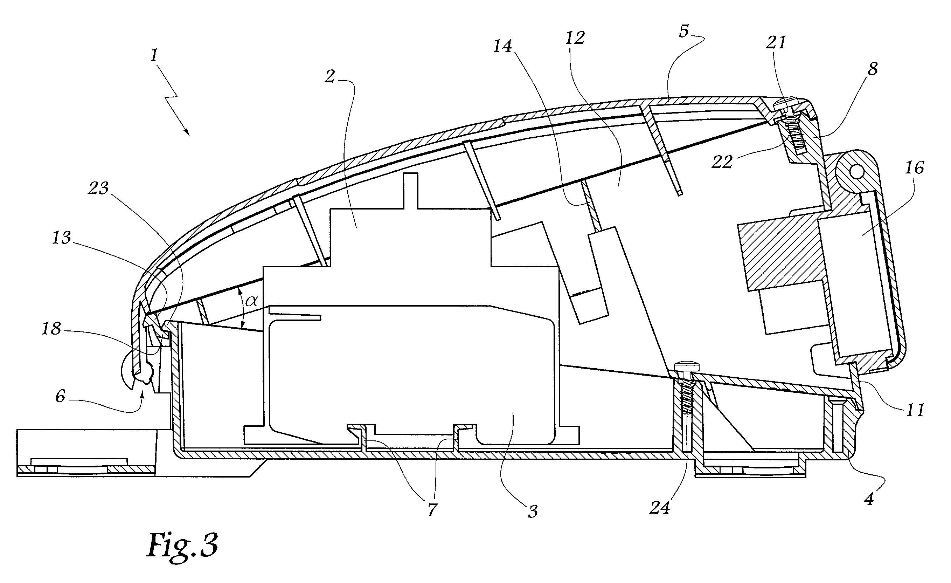

Après que la prise électrique 16 a été raccordée au disjoncteur 2, le couvercle 5 est basculé contre l'entretoise 8 , à laquelle on le fixe au moyen de la vis 22. L'installation de l'entretoise 8 est achevée en même temps que le serrage de cette vis 22. Le coffret 1 est alors tel qu'illustré aux figures 2 et 3, le bord 19 du couvercle 5 s'adaptant sur le bord 9 de l'entretoise 8. Le corps 4, le couvercle 5 et l'entretoise 8 délimitent conjointement un volume intérieur dans lequel le disjoncteur 2 et le coupe-circuit 3 ne sont pas accessibles de l'extérieur.

Il ressort de ce qui précède que l'installation de l'entretoise 8 est une opération simple et rapide à effectuer. En particulier, elle ne requiert pas le démontage du couvercle 5. De plus, seulement deux vis, à savoir les vis 22 et 24, sont à installer.

Il s'ensuit que conformément au but de l'invention, l'installation de la prise 16 est également une opération simple et rapide à effectuer.

Pour démonter l'entretoise 8, on applique la procédure inverse de celle qui vient d'être décrite.

On notera que la vis 22 passe avantageusement dans le même trou 21 lorsqu'elle fixe le couvercle 5 sur le corps 4 et lorsqu'elle fixe ce même couvercle 5 sur l'entretoise 8.

Le boîtier 1 et l'entretoise 8 offrent les mêmes fonctionnalités que les deux boîtiers différents de l'art antérieur, alors que leur fabrication, leur stockage, leur transport et leur commercialisation présentent l'avantage d'être plus simples et donc moins coûteux que ceux de ces deux boîtiers différents.

L'invention ne se limite pas au mode de réalisation décrit précédemment. En particulier, il peut être prévu qu'une fois que le boîtier est équipé de l'entretoise, seule cette dernière porte le couvercle qui est dissocié du corps. En d'autres termes, le couvercle est amovible et doit être dissocié du corps avant qu'il soit possible de le remonter sur l'entretoise et de monter cette dernière sur le corps. Dans un tel cas, l'entretoise peut ne plus avoir la forme d'un coin. Comme l'entretoise référencée 8, elle a néanmoins la forme d'un tronçon de conduit creux, sur un bord duquel est destiné à s'appliquer le couvercle, l'autre bord de ce conduit creux étant destiné à épouser le bord du corps.

## Revendications

1. Entretoise, **caractérisée en ce qu'**elle est équipée d'une prise électrique (16) et a une géométrie creuse permettant son insertion et son installation entre un corps fixe (4) d'un boîtier (1) et un couvercle (5) articulé sur ce corps fixe (4).

2. Entretoise selon la revendication 1, **caractérisée en ce qu'**elle a une forme de coin creux.

3. Entretoise selon la revendication 2, **caractérisée en ce qu'**elle comprend une paroi avant (11) sur laquelle est montée ladite prise électrique (16), une traverse arrière (13) et deux côtés (12) reliant ladite paroi avant (11) à ladite traverse arrière (13), lesdits côtés (12) ayant une largeur croissante de l'arrière vers l'avant.

4. Entretoise selon la revendication 3, **caractérisée en ce que** ladite traverse arrière (13) porte des moyens (18) d'accrochage de l'entretoise audit corps (4).

5. Entretoise selon l'une quelconque des revendications 3 ou 4, **caractérisée en ce que** la prise électrique (16) obture une ouverture (15) ménagée dans la paroi avant (11).

6. Entretoise selon l'une quelconque des revendications précédentes, **caractérisée en ce qu'**elle a une forme annulaire telle qu'elle peut entourer au moins un appareillage (2, 3) contenu par le boîtier (1).

7. Entretoise selon l'une quelconque des revendications 3à 5, **caractérisée en ce qu'**à distance de la traverse arrière (13) et de la paroi avant (11) , elle comporte une traverse de renforcement (14) qui relie les deux côtés (12) l'un à l'autre.

8. Boîtier, comportant un corps (4) et un couvercle (5) articulés l'un à l'autre, **caractérisé en ce qu'**il comporte une entretoise amovible (8) selon l'une quelconque des revendications précédentes, cette entretoise (8) étant placée entre le corps (4) et le couvercle (5) qui sont décalés angulairement l'un de l'autre.

9. Boîtier selon la revendication 8, **caractérisé en ce que** l'entretoise (8) est selon la revendication 4, lesdits moyens d'accrochage (18) étant accrochés au corps (4), des moyens de fixation (24) étant prévus à distance des moyens d'accrochage (18) et fixant de manière amovible l'entretoise (8) au corps (4).

10. Boîtier selon la revendication 9, **caractérisé en ce que** d'autres moyens de fixation (22) sont prévus à distance des moyens d'accrochage (18) et fixent de manière amovible le couvercle (5) à l'entretoise (8).

11. Boîtier, comportant un corps (4) et un couvercle (5), **caractérisé en ce qu'**il comporte une entretoise amovible (8) selon l'une quelconque des revendications précédentes, cette entretoise (8) étant placée entre le corps (4) et le couvercle (5).

12. Boîtier selon l'une quelconque des revendications 8 à 11, **caractérisé en ce que** le corps (4), le couvercle (5) et l'entretoise (8) délimitent conjointement un volume intérieur non accessible de l'extérieur.
